# EUROPEAN PATENT APPLICATION

(11) **EP 4 428 261 A1**
(43) Date of publication of application: **11.09.2024**
(21) Application number: 22901195.2
(22) Date of filing: 25.11.2022
(51) Int. Cl.: C22C 38/00, C22C 38/18, C22C 38/24, F16C 19/06, F16C 33/32, F16C 33/62, C21D 9/40

(54) **ROLLING COMPONENT AND ROLLING BEARING**

(30) Priority: 30.11.2021 JP 2021194245; 30.11.2021 JP 2021194251; 30.11.2021 JP 2021194688
(71) Applicant: NTN Corporation, Osaka-shi, Osaka 530-0005 (JP)
(72) Inventor: YAMADA, Masahiro, Kuwana-shi, Mie 511-0867 (JP); SATO, Miyu, Kuwana-shi, Mie 511-0867 (JP); OHKI, Chikara, Kuwana-shi, Mie 511-0867 (JP)
(74) Representative: Bockhorni & Brüntjen Partnerschaft Patentanwälte mbB
(86) International application number: PCT/JP2022/043531
(87) International publication number: WO 2023/100762

(57) **Abstract**

A rolling component (10) has a surface (10a, 10b, 10c, 10d) and is made of steel. The rolling component comprises a surface layer portion (50) that is a region up to 20 µm in depth from the surface. The rolling component is intended for use with hydrogen-utilizing equipment. The steel contains 0.70 mass percent or more and 1.10 mass percent or less of carbon, 0.15 mass percent or more and 0.35 mass percent or less of silicon, 0.30 mass percent or more and 0.60 mass percent or less of manganese, 1.30 mass percent or more and 1.60 mass percent or less of chromium, 0.01 mass percent or more and 0.50 mass percent or less of molybdenum, and 0.01 mass percent or more and 0.50 mass percent or less of vanadium, with a balance consisting of iron and unavoidable impurities. In the surface layer portion, the steel has a nitrogen concentration of 0.2 mass percent or more.

## Description

### TECHNICAL FIELD

The present invention relates to a rolling component and a rolling bearing. More particularly, the present invention relates to a rolling component and rolling bearing for hydrogen-utilizing equipment.

### BACKGROUND ART

PTL 1 (Japanese Patent No. 3990212) describes a rolling component. The rolling component described in PTL 1 is made of SUJ2, which is a high carbon chromium bearing steel defined in Japanese Industrial Standards (JIS). The bearing component described in PTL 1 is formed by nitriding, quenching and tempering.

### CITATION LIST

### PATENT LITERATURE

PTL 1: Patent No. 3990212

### SUMMARY OF INVENTION

### TECHNICAL PROBLEM

However, when the rolling component described in PTL 1 is used in hydrogen-utilizing equipment, that is, in an environment exposed to hydrogen, the rolling component may have a contact surface early flaked due to hydrogen brittleness. In addition, the rolling component described in PTL 1 may be insufficiently resistant to formation of indentation.

The present invention has been made in view of the above problem in conventional art. More specifically, the present invention provides a rolling component for hydrogen-utilizing equipment, that can suppress hydrogen embrittlement accompanying penetration by hydrogen through a surface and is enhanced in resistance to formation of indentation.

### SOLUTION TO PROBLEM

A rolling component according to the present invention has a surface and is made of steel. The rolling component comprises a surface layer portion that is a region up to 20 µm in depth from the surface. The rolling component is intended for use with hydrogen-utilizing equipment. The steel contains 0.70 mass percent or more and 1.10 mass percent or less of carbon, 0.15 mass percent or more and 0.35 mass percent or less of silicon, 0.30 mass percent or more and 0.60 mass percent or less of manganese, and 1.30 mass percent or more and 1.60 mass percent or less of chromium. A precipitate containing chromium or vanadium as a major ingredient is formed in the steel in the surface layer portion. A compressive residual stress at a location having a distance of 50 µm from the surface is 80 MPa or more.

In the rolling component, the steel may further contain 0.01 mass percent or more and 0.50 mass percent or less of vanadium and 0.01 mass percent or more and 0.5 mass percent or more of molybdenum.

In the rolling component, the steel may contain 0.90 mass percent or more and 1.10 mass percent or less of carbon, 0.20 mass percent or more and 0.30 mass percent or less of silicon, 0.40 mass percent or more and 0.50 mass percent or less of manganese, 1.40 mass percent or more and 1.60 mass percent or less of chromium, 0.10 mass percent or more and 0.30 mass percent or less of molybdenum, and 0.20 mass percent or more and 0.30 mass percent or less of vanadium, with a balance consisting of iron and unavoidable impurities.

In the rolling component, the precipitate may have a maximum grain size of 2.0 µm or less. In the rolling component, the precipitate may have an average area fraction of 1.0 percent or more. In the rolling component, the steel may have a hardness of 64 HRC or more at the location having the distance of 50 µm from the surface. In the rolling component, the steel may contain retained austenite in a quantity of less than 25 volume percent at the location having the distance of 50 µm from the surface.

In the rolling component, the steel in the surface layer portion may have a nitrogen concentration of 0.2 mass percent or more. In the rolling component, the top 50 percent in area fraction of martensite block grains in the steel in the surface layer portion has an average grain size of 1.5 µm or less.

A rolling bearing according to the present invention comprises an inner ring, an outer ring, and a rolling element. At least one of the inner ring, the outer ring, and the rolling element is the above rolling component. The rolling bearing is intended for use with hydrogen-utilizing equipment.

### ADVANTAGEOUS EFFECTS OF INVENTION

The rolling component and rolling bearing of the present invention can suppress hydrogen embrittlement accompanying penetration by hydrogen through a surface and also be enhanced in resistance to formation of indentation.

### BRIEF DESCRIPTION OF DRAWINGS

Fig. 1 is a cross section of a rolling bearing 100.
Fig. 2 is an enlarged cross section of a ball valve 200.
Fig. 3 is a cross section of a hydrogen circulation pump 300.
Fig. 4 represents a process of a method for manufacturing rolling bearing 100.
Fig. 5 represents a process of a modified example of the method for manufacturing rolling bearing 100.
Fig. 6 is a phase map of a cross section in the vicinity of a raceway surface of sample 1, as obtained through EBSD.
Fig. 7 is a phase map of a cross section in the vicinity of a raceway surface of sample 2, as obtained through EBSD.
Fig. 8 is a phase map of a cross section in the vicinity of a raceway surface of sample 3, as obtained through EBSD.
Fig. 9 is a phase map of a cross section in the vicinity of a raceway surface of sample 4, as obtained through EBSD.
Fig. 10 is a graph showing the average grain size of martensite block grains in steel in a region up to 20 µm in depth from the raceway surface in each of samples 1 to 4.
Fig. 11 is a cross section of a rolling bearing 100A.
Fig. 12 is a cross section of a rolling bearing 100B.
Fig. 13 represents a process of a method for manufacturing rolling bearing 100B.
Fig. 14 is a graph showing a distribution in content of carbon and nitrogen in the surface layer portion of the inner and outer rings of Sample 5.
Fig. 15 is a representative cross-sectional FE-SEM image in the surface layer portion of the inner and outer rings of Sample 5.

### DESCRIPTION OF EMBODIMENTS

Details of embodiments of the present invention will now be described by referring to the figures. In the following figures, identical or equivalent components are identically denoted and will not be described repeatedly.

### (First Embodiment)

A rolling bearing according to a first embodiment will now be described. The rolling bearing according to the first embodiment will be referred to as a rolling bearing 100.

### <Configuration of Rolling Bearing 100>

A configuration of rolling bearing 100 will be described below.

Rolling bearing 100 is, for example, a deep groove ball bearing. However, rolling bearing 100 is not limited thereto. Rolling bearing 100 may for example be an angular ball bearing, a cylindrical roller bearing, a conical roller bearing, or a self-aligning roller bearing.

Rolling bearing 100 is intended for use with hydrogen-utilizing equipment. The hydrogen-utilizing equipment is, for example, a ball valve or a compressor for a hydrogen station. The compressor's system is not particularly limited. For example, the compressor may be reciprocating (reciprocal), rotary (screw), centrifugal or axial. The hydrogen-utilizing equipment may be a high pressure hydrogen pressure reducing valve or a hydrogen circulation pump for a fuel cell vehicle. Rolling bearing 100 may be any bearing exposed to hydrogen while it is used.

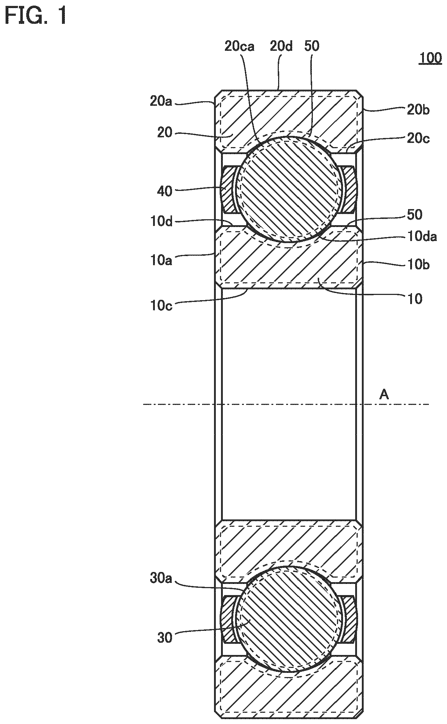

Fig. 1 is a cross section of rolling bearing 100. As shown in Fig. 1, rolling bearing 100 has a central axis A. Fig. 1 shows a cross section parallel to central axis A and passing through central axis A. Rolling bearing 100 comprises an inner ring 10, an outer ring 20, a plurality of rolling elements 30, and a cage 40. Inner ring 10 and outer ring 20 are ring-shaped. Rolling elements 30 are balls (or spherical).

A direction along central axis A is defined as an axial direction. A direction passing across central axis A and orthogonal to central axis A is defined as a radial direction. A direction along a circumference about central axis A is defined as a circumferential direction.

Inner ring 10 includes a first end face 10a, a second end face 10b, an inner circumferential surface 10c, and an outer circumferential surface 10d. First end face 10a, second end face 10b, inner circumferential surface 10c, and outer circumferential surface 10d constitute a surface of inner ring 10. First end face 10a and second end face 10b are end faces of inner ring 10 in the axial direction. Second end face 10b is a face opposite to first end face 10a.

Inner circumferential surface 10c extends in the circumferential direction. Inner circumferential surface 10c faces central axis A. Although not shown, inner ring 10 is fitted to a shaft on inner circumferential surface 10c. Inner circumferential surface 10c has one end in the axial direction contiguous to first end face 10a and the other end in the axial direction contiguous to second end face 10b.

Outer circumferential surface 10d extends in the circumferential direction. Outer circumferential surface 10d faces away from central axis A. That is, outer circumferential surface 10d is a surface opposite to inner circumferential surface 10c in the radial direction. Outer circumferential surface 10d has one end in the axial direction contiguous to first end face 10a and the other end in the axial direction contiguous to second end face 10b.

Outer circumferential surface 10d has a raceway surface 10da. Raceway surface 10da is a portion of outer circumferential surface 10d that comes into contact with rolling element 30. Raceway surface 10da extends in the circumferential direction. Raceway surface 10da is located at a center portion of outer circumferential surface 10d in the axial direction. In cross section, raceway surface 10da has a partial arcuate shape recessed toward inner circumferential surface 10c.

Outer ring 20 includes a first end face 20a, a second end face 20b, an inner circumferential surface 20c, and an outer circumferential surface 20d. First end face 20a, second end face 20b, inner circumferential surface 20c, and outer circumferential surface 20d constitute a surface of outer ring 20. Outer ring 20 is disposed radially outward of inner ring 10 with inner circumferential surface 20c spaced from and facing outer circumferential surface 10d.

First end face 20a and second end face 20b are end faces of outer ring 20 in the axial direction. Second end face 20b is a face opposite to first end face 20a.

Inner circumferential surface 20c extends in the circumferential direction. Inner circumferential surface 20c faces central axis A. Inner circumferential surface 20c has one end in the axial direction contiguous to first end face 20a and the other end in the axial direction contiguous to second end face 20b.

Inner circumferential surface 20c has a raceway surface 20ca. Raceway surface 20ca is a portion of inner circumferential surface 20c that comes into contact with rolling element 30. Raceway surface 20ca extends in the circumferential direction. Raceway surface 20ca is located at a center portion of inner circumferential surface 20c in the axial direction. In cross section, raceway surface 20ca has a partial arcuate shape recessed toward outer circumferential surface 20d.

Outer circumferential surface 20d extends in the circumferential direction. Outer circumferential surface 20d faces away from central axis A. That is, outer circumferential surface 20d is a surface opposite to inner circumferential surface 20c in the radial direction. Although not shown, outer ring 20 is fitted to a housing on outer circumferential surface 20d. Outer circumferential surface 20d has one end in the axial direction contiguous to first end face 20a and the other end in the axial direction contiguous to second end face 20b.

Rolling element 30 is disposed between outer circumferential surface 10d and inner circumferential surface 20c, more specifically, between raceway surface 10da and raceway surface 20ca. The plurality of rolling elements 30 are disposed in the circumferential direction. Rolling element 30 has a surface 30a. Cage 40 holds the plurality of rolling elements 30. Cage 40 holds the plurality of rolling elements 30 such that two adjacent rolling elements 30 have a distance therebetween in the circumferential direction within a fixed range.

Inner ring 10, outer ring 20 and rolling elements 30 are made of steel. More specifically, inner ring 10, outer ring 20 and rolling elements 30 are made of steel having a composition shown in Table 1 (hereinafter referred to as a "first composition").

### [Table 1]

**Table 1**

| C | Si | Mn | Cr | Mo | V | balance |
|---|---|---|---|---|---|---|
| 0.70 or more and 1.10 or less | 0.15 or more and 0.35 or less | 0.30 or more and 0.60 or less | 1.30 or more and 1.60 or less | 0.01 or more and 0.50 or less | 0.01 or more and 0.50 or less | Fe and unavoidable impurities |

| | | | | | | |
|---|---|---|---|---|---|---|
| unit: mass percent | | | | | | |

Carbon affects hardness of steel on a surface of a rolling component (inner ring 10, outer ring 20, and rolling element 30) after quenching. When the content of carbon in the steel is less than 0.70 mass percent, it is difficult to ensure sufficient hardness on the surface of the rolling component. When the content of carbon in the steel is less than 0.70 mass percent, it is necessary to compensate for the carbon content in the surface of the rolling component by carburization or the like, which decreases production efficiency and increases production cost. In contrast, when the content of carbon in the steel exceeds 1.10 mass percent, cracking (quenching cracks) may be caused at the time of quenching. Accordingly, for the steel of the first composition, the carbon content is set to 0.70 mass percent or more and 1.10 mass percent or less.

Silicon is added to ensure deoxidation during refining of steel as well as workability before a nitriding treatment. When the content of silicon in the steel is less than 0.15 mass percent, the steel will have insufficient resistance to temper softening. As a result, the rolling component may have a surface decreased in hardness due to tempering after the quenching, or elevation in temperature when rolling bearing 100 is used. Further, in that case, the steel will have insufficient workability to be worked into the rolling component.

When the content of silicon in the steel exceeds 0.35 mass percent, the steel is excessively hard and would rather be decreased in workability to be worked into the rolling component. Further, in that case, the steel's material cost would increase. Accordingly, for the steel of the first composition, the silicon content is set to 0.15 mass percent or more and 0.35 mass percent or less.

Manganese is added to ensure that steel has hardenability and hardness. When the content of manganese in the steel is less than 0.30 mass percent, it is difficult to ensure that the steel has hardenability. When the content of manganese in the steel exceeds 0.60 mass percent, a manganese-based nonmetallic inclusion as an impurity would increase. Accordingly, for the steel of the first composition, the manganese content is set to 0.30 mass percent or more and 0.60 mass percent or less.

Chromium is added to ensure that steel has hardenability and form a fine precipitate (nitride/carbonitride) along with a nitriding treatment. When the content of chromium in the steel is less than 1.30 mass percent, it is difficult to ensure that the steel has hardenability and form a fine precipitate sufficiently. When the content of chromium in the steel exceeds 1.60 mass percent, the steel's material cost would increase. Accordingly, for the steel of the first composition, the chromium content is set to 1.30 mass percent or more and 1.60 mass percent or less.

Molybdenum is added to ensure that steel has hardenability and form a fine precipitate along with a nitriding treatment. Molybdenum has a strong affinity for carbon and accordingly, precipitates as an insoluble carbide in the steel during the nitriding treatment. The insoluble carbide of molybdenum serves as a precipitation core at the time of quenching, and molybdenum thus increases the amount of the precipitate after quenching.

When the content of molybdenum in the steel is less than 0.01 mass percent, it is difficult to ensure that the steel has hardenability and form a fine precipitate sufficiently. When the content of molybdenum in the steel exceeds 0.50 mass percent, the steel's material cost would increase. Accordingly, for the steel of the first composition, the content of molybdenum is set to 0.01 mass percent or more and 0.50 mass percent or less.

Vanadium is added to ensure that steel has hardenability and form a fine precipitate along with a nitriding treatment. When the content of vanadium in the steel is less than 0.01 mass percent, it is difficult to ensure that the steel has hardenability and form a fine precipitate sufficiently. When the content of vanadium in the steel exceeds 0.50 mass percent, the steel's material cost would increase. Accordingly, for the steel of the first composition, the content of vanadium is set to 0.01 mass percent or more and 0.50 mass percent or less.

Inner ring 10, outer ring 20 and rolling elements 30 may be made of a steel having a composition (hereinafter referred to as a "second composition") shown in Table 2. Inner ring 10, outer ring 20 and rolling elements 30 may be made of a steel having a composition (hereinafter referred to as a "third composition") shown in Table 3. When inner ring 10, outer ring 20 and rolling element 30 are made of the steel of the first or second composition, they have precipitates more finely dispersed in the steel of a surface layer portion 50 described later. It is not necessary that inner ring 10, outer ring 20 and rolling element 30 are all formed of the steel of the first, second or third composition, and at least one of inner ring 10, outer ring 20 and rolling element 30 may be formed of the steel of the first, second or third composition.

### [Table 2]

**Table 2**

| C | Si | Mn | Cr | Mo | V | balance |
|---|---|---|---|---|---|---|
| 0.90 or more and 1.10 or less | 0.20 or more and 0.30 or less | 0.40 or more and 0.50 or less | 1.40 or more and 1.60 or less | 0.10 or more and 0.30 or less | 0.20 or more and 0.30 or less | Fe and unavoidable impurities |

| | | | | | | |
|---|---|---|---|---|---|---|
| unit: mass percent | | | | | | |

### [Table 3]

**Table 3**

| C | Si | Mn | Cr | Mo | V | balance |
|---|---|---|---|---|---|---|
| 0.70 or more and 1.10 or less | 0.15 or more and 0.35 or less | 0.30 or more and 0.60 or less | 1.30 or more and 1.60 or less | - | - | Fe and unavoidable impurities |

| | | | | | | |
|---|---|---|---|---|---|---|
| unit: mass percent | | | | | | |

As shown in Fig. 1, inner ring 10, outer ring 20, and rolling element 30 have surface layer portion 50. For inner ring 10, a region up to 20 µm in depth from the surface of inner ring 10 is surface layer portion 50. For outer ring 20, a region up to 20 µm in depth from the surface of outer ring 20 is surface layer portion 50. For rolling element 30, a region up to 20 µm in depth from surface 30a is surface layer portion 50. Surface layer portion 50 is formed by a nitriding treatment. For inner ring 10, surface layer portion 50 formed on at least raceway surface 10da suffices, and for outer ring 20, surface layer portion 50 formed on raceway surface 20ca suffices.

A precipitate is formed in the steel in surface layer portion 50. The precipitate contains chromium or vanadium as a major ingredient. The precipitate is a nitride containing chromium or vanadium as a major ingredient. The precipitate may be a carbonitride containing chromium or vanadium as a major ingredient. The precipitate may contain a mixture of the nitride and the carbonitride.

Surface layer portion 50 is not necessarily formed at all of the surface of inner ring 10, the surface of outer ring 20, and the surface of rolling element 30, and may be formed at at least one of the surface of inner ring 10, the surface of outer ring 20, and the surface of rolling element 30.

The nitride containing chromium (vanadium) as a major ingredient is a nitride of chromium (vanadium), or the nitride of chromium (vanadium) with some site of chromium (vanadium) substituted with an alloy element other than chromium (vanadium). The carbonitride containing chromium (vanadium) as a major ingredient is a carbide of chromium (vanadium) with some site of carbon substituted with nitrogen. The carbonitride containing chromium (vanadium) as a major ingredient may have a site of chromium (vanadium) substituted with an alloy element other than chromium (vanadium).

A location having a depth of 50 µm from the surface of inner ring 10, a location having a depth of 50 µm from the surface of outer ring 20, and a location having a depth of 50 µm from the surface (i.e., surface 30a) of rolling element 30 have a compressive residual stress of 80 MPa or more. The compressive residual stress at the location having the depth of 50 µm from the surface of inner ring 10 and the location having the depth of 50 µm from the surface of outer ring 20 is measured, for example, in the circumferential direction. The compressive residual stress is measured through X-ray diffraction.

The precipitate preferably has a maximum grain size of 2.0 µm or less. The precipitate preferably has an average area fraction of 1.0 percent or more. When the precipitate has a maximum grain size of 2.0 µm or less and an average area fraction of 1.0 percent or more, such precipitates finely disperse and thus improve wear resistance on the surface of inner ring 10, the surface of outer ring 20, and the surface of rolling element 30. The precipitate more preferably has a maximum grain size of 1.0 µm or less. The precipitate more preferably has an average area fraction of 2.0 percent or more.

The average area fraction of the precipitate is calculated by acquiring a cross-sectional image of surface layer portion 50 with a field emission scanning electron microscope (FE-SEM) at a magnification of 5,000 times, binarizing the cross-sectional image, and subjecting the binarized cross-sectional image to image processing. The cross-sectional image of surface layer portion 50 is obtained in three or more fields of view, and the average area fraction is an average value of area fractions of precipitates obtained from a plurality of such cross-sectional images.

The grain size of each precipitate is obtained by using the same method as described above to obtain the area of each precipitate, dividing the area by π, and multiplying the square root of the value of the divided area by 2. The maximum one of the obtained grain sizes of the precipitates is set as the maximum grain size of the precipitate.

The steel in surface layer portion 50 preferably has a nitrogen concentration of 0.2 mass percent or more. The nitrogen concentration in the steel in surface layer portion 50 is measured with an electron probe microanalyzer (EPMA). Note that the steel in surface layer portion 50 has a nitrogen concentration for example of 0.5 mass percent or less.

The steel preferably has a hardness of 64 HRC or more at a location having a depth of 50 µm from the surface of inner ring 10, a location having a depth of 50 µm from the surface of outer ring 20, and a location having a depth of 50 µm from the surface (i.e., surface 30a) of rolling element 30.

The steel is measured in hardness at the location having the depth of 50 µm from the surface of inner ring 10, the location having the depth of 50 µm from the surface of outer ring 20, and the location having the depth of 50 µm from the surface (i.e., surface 30a) of rolling element 30 in a Rockwell hardness test method defined in JIS (JIS Z 2245:2016).

The steel in surface layer portion 50 has martensite block grains. Two adjacent martensite block grains form a grain boundary with a difference in crystal orientation of 15° or more. From a different point of view, a portion having crystal disorientation with a difference in crystal orientation of less than 15° is not regarded as a crystal grain boundary of martensite block grains. A grain boundary of martensite block grains is determined through EBSD (Electron Back Scattered Diffraction).

The top 50 percent in area fraction of martensite block grains in the steel in surface layer portion 50 preferably has an average grain size of 1.5 µm or less. When the steel in surface layer portion 50 has martensite block grains refined such that the top 50 percent in area fraction of martensite block grains has an average grain size of 1.5 µm or less, surface layer portion 50 is increased in toughness and inner ring 10, outer ring 20, and rolling element 30 each have a surface and a vicinity thereof improved in shear resistance.

The average grain size of the top 50 percent in area fraction of martensite block grains is measured in the following method. First, a cross section including surface layer portion 50 is observed. In this observation, the EBSD method is employed to identify martensite block grains included in an observation field of view. The observation field of view is an area observed at a magnification of 1,500 times. Second, the area of each martensite block grain included in the observation field of view is analyzed from crystal orientation data obtained in the EBSD method.

Third, the area of each martensite block grain included in the observation field of view is added together in descending order in area. This addition is performed until 50 percent of the total area of the martensite block grains included in the observation field of view is reached. A circle equivalent diameter is calculated for each martensite block grain added as described above. The equivalent circle diameter is a square root of a value obtained by dividing the area of the martensite block grain by π/4. The average value of the circle equivalent diameters of the martensite block grains added as described above is regarded as the average grain size of the top 50 percent in area fraction of martensite block grains.

The steel preferably contains retained austenite in a quantity of less than 25 volume percent at the location having the depth of 50 µm from the surface of inner ring 10, the location having the depth of 50 µm from the surface of outer ring 20, and the location having the depth of 50 µm from the surface (surface 30a) of rolling element 30. This suppresses a dimensional change of inner ring 10, outer ring 20, and rolling element 30 caused with time as the residual austenite is decomposed. The steel more preferably contains retained austenite in a quantity of less than 20 volume percent at the location having the depth of 50 µm from the surface of inner ring 10, the location having the depth of 50 µm from the surface of outer ring 20, and the location having the depth of 50 µm from the surface (surface 30a) of rolling element 30.

Quantity of retained austenite in the steel at each of the location having the depth of 50 µm from the surface of inner ring 10, the location having the depth of 50 µm from the surface of outer ring 20, and the location having the depth of 50 µm from the surface (surface 30a) of rolling element 30, is measured through X-ray diffraction. More specifically, quantity of retained austenite in the steel at each of the location having the depth of 50 µm from the surface of inner ring 10, the location having the depth of 50 µm from the surface of outer ring 20, and the location having the depth of 50 µm from the surface (surface 30a) of rolling element 30, is measured using MSF-3M available from Rigaku Corporation.

While in the above description a case has been described in which the rolling member according to the first embodiment is a component of a rolling bearing, the rolling member according to the first embodiment may be a plain bearing.

### <Exemplary application of rolling member according to the first embodiment>

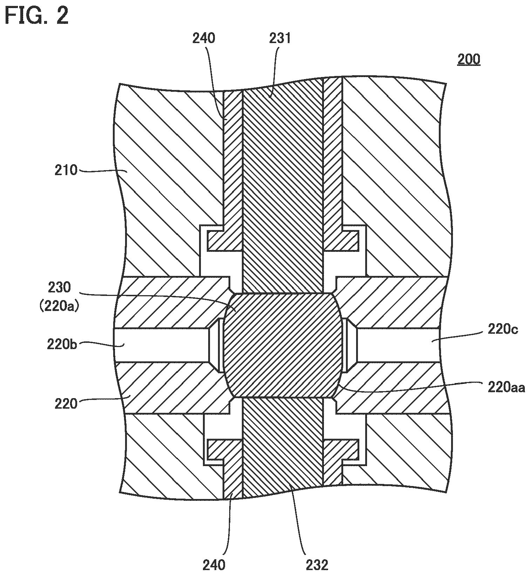

The rolling member according to the first embodiment is used for a ball valve 200. Fig. 2 is an enlarged cross section of ball valve 200. As shown in Fig. 2, ball valve 200 includes a body 210, a seat retainer 220, a ball 230, stems 231 and 232, and a plain bearing 240.

Seat retainer 220 is disposed inside body 210. Seat retainer 220 includes an internal space 220a and channels 220b and 220c. Channels 220b and 220c are connected to internal space 220a. Ball 230 is disposed in internal space 220a. Internal space 220a has a wall surface in contact with a surface of ball 230 at a seal portion 220aa.

Stems 231 and 232 are connected to the upper and lower ends, respectively, of ball 230. When stems 231 and 232 rotate about a central axis, channels 220b and 220c are interconnected through a through hole (not shown) formed through ball 230. Stems 231 and 232 are inserted through a through hole formed through body 210 and seat retainer 220. Hydrogen passes through channels 220b and 220c and the throughhole formed through ball 230.

Plain bearing 240 has a cylindrical shape and has an outer circumferential surface attached to body 210. Plain bearing 240 supports stem 231 (stem 232) rotatably. Plain bearing 240 is a rolling member according to the first embodiment. From another viewpoint, plain bearing 240 is made of steel having the first, second, or third composition, and has a contact surface with surface layer portion 50.

### <Exemplary application of rolling bearing according to the first embodiment>

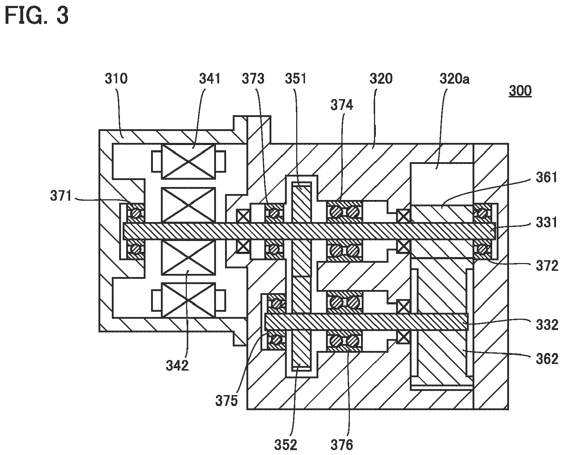

Fig. 3 is a cross section of a hydrogen circulation pump 300. Hydrogen circulation pump 300 comprises a motor housing 310, a pump housing 320, rotary shafts 331 and 332, a motor stator 341, a motor rotor 342, gears 351 and 352, a rotors 361 and 362, and rolling bearings 371, 372, 373, 374, 375 and 376.

Motor housing 310 is attached to pump housing 320. Rotary shaft 331 has one end side located in motor housing 310 and the other end side located in pump housing 320. Rotary shaft 331 has one end and the other end rotatably supported by rolling bearing 371 disposed in motor housing 310 and rolling bearing 372 disposed in pump housing 320, respectively. Rotary shaft 331 is rotatably supported between one end and the other end by rolling bearings 373 and 374 disposed in pump housing 320.

Rotary shaft 332 is disposed in pump housing 320. Rotary shaft 332 has one end rotatably supported by rolling bearing 375 disposed in pump housing 320. Rotary shaft 332 is rotatably supported at a location distant from one end by rolling bearing 376 disposed in pump housing 320.

Motor stator 341 is disposed in motor housing 310. Motor rotor 342 is attached to rotary shaft 331 so as to face motor stator 341. Rotary shaft 331 is rotated by motor stator 341 and motor rotor 342. Gears 351 and 352 are attached to rotary shafts 331 and 332, respectively. Gears 351 and 352 transmit rotation of rotary shaft 331 to rotary shaft 332. Gear 351 is located between rolling bearings 373 and 374, and gear 352 is located between rolling bearings 375 and 376.

A pump chamber 320a is formed in pump housing 320. Rotors 361 and 362 are disposed in pump chamber 320a. Rotors 361 and 362 are attached to rotary shafts 331 and 332, respectively. As rotary shaft 331 rotates, rotor 361 rotates, and as rotary shaft 332 rotates, rotor 362 rotates, and this allows pump chamber 320a to suck and discharge hydrogen.

Rolling bearings 371, 372, 373, and 375 are deep groove ball bearings. Rolling bearings 374 and 375 are double row angular ball bearings. Rolling bearings 371, 372, 373, 374, 375, and 376 are rolling bearings according to the first embodiment. That is, rolling bearings 371, 372, 373, 374, 375 and 376 each have a raceway member and a rolling element made of a steel having the first, second, or third composition, and have a contact surface with surface layer portion 50.

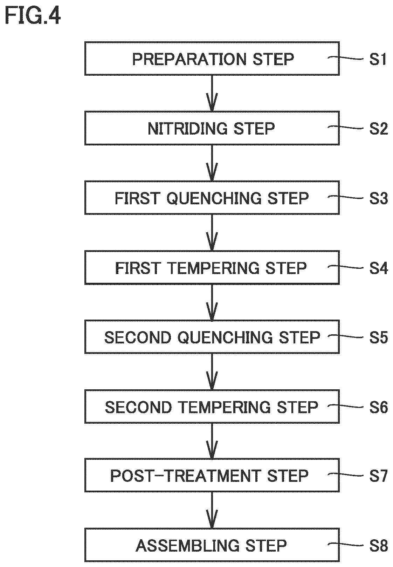

Fig. 4 represents a process of a method for manufacturing rolling bearing 100. As shown in Fig. 4, the method for manufacturing rolling bearing 100 comprises a preparation step S1, a nitriding step S2, a first quenching step S3, a first tempering step S4, a second quenching step S5, a second tempering step S6, a post-treatment step S7, and an assembling step S8. The method for manufacturing rolling bearing 100 may not comprise first tempering step S4 and second quenching step S5.

In preparation step S1, a workpiece is prepared. As the workpiece, a ring-shaped member is prepared when inner ring 10 and outer ring 20 are to be formed, whereas a spherical member is prepared when rolling elements 30 is to be formed. The workpiece is made of steel having the first composition or the second composition.

In nitriding step S2, the workpiece has a surface subjected to a nitriding treatment. The nitriding treatment is performed by holding the workpiece at a temperature equal to or higher than the A₁ transformation point for a predetermined period of time in a gaseous atmosphere containing a gas (e.g., gaseous ammonia) serving as a nitrogen source. In first quenching step S3, the workpiece is quenched. The quenching is performed by holding the workpiece at a temperature equal to or higher than the A₁ transformation point for a predetermined period of time and subsequently cooling the workpiece to a temperature equal to or lower than the Ms transformation point.

In first tempering step S4, the workpiece is tempered. The tempering is performed by holding the workpiece at a temperature lower than the A₁ transformation point for a predetermined period of time.

In second quenching step S5, the workpiece is quenched. The quenching is performed by holding the workpiece at a temperature equal to or higher than the A₁ transformation point for a predetermined period of time and subsequently cooling the workpiece to a temperature equal to or lower than the Ms transformation point.

In second tempering step S6, the workpiece is tempered. The tempering is performed by heating and holding the workpiece at a temperature lower than the A₁ transformation point for a predetermined period of time.

In post-treatment step S7, the workpiece is finished (ground/polished) and cleaned. Thus, inner ring 10, outer ring 20 and rolling elements 30 are formed. In assembling step S8, inner ring 10, outer ring 20, and rolling element 30 are assembled together with cage 40. Thus, rolling bearing 100 having the structure shown in Fig. 1 is manufactured.

The holding temperature in second quenching step S5 is lower than that in nitriding step S2 and first quenching step S3. The holding temperature in nitriding step S2 and first quenching step S3 is, for example, 850°C. The holding temperature in second quenching step S5 is, for example, 810°C. The holding temperature and the holding time in first tempering step S4 and second tempering step S6 are, for example, 180°C and 2 hours, respectively.

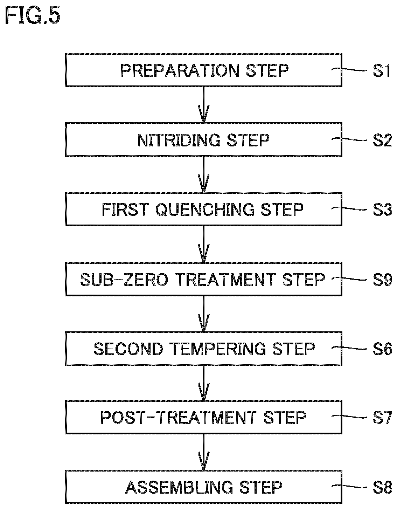

Fig. 5 represents a process of a modified example of the method for manufacturing rolling bearing 100. As shown in Fig. 5, the method for manufacturing rolling bearing 100 may not comprise first tempering step S4, and may comprise a sub-zero treatment step S9 instead of second quenching step S5. In sub-zero treatment step S9, the workpiece is cooled to a temperature for example of - 100°C or higher and room temperature or lower.

### <Effect of rolling bearing 100>

An effect of rolling bearing 100 will be described below.

Rolling bearing 100 has inner ring 10, outer ring 20 and rolling element 30 made of steel having the first, second or third composition, and accordingly, has a fine precipitate formed in the steel in surface layer portion 50 formed by a nitriding treatment. A vicinity of the fine precipitate in surface layer portion 50 serves as a site to trap hydrogen, and this reduces an amount of hydrogen penetrating into surface layer portion 50. Rolling bearing 100 is thus less likely to have early flaking damage attributed to hydrogen brittleness.

Rolling bearing 100 has a compressive residual stress of 80 MPa or more at a location having a depth of 50 µm from the surface of inner ring 10, a location having a depth of 50 µm from the surface of outer ring 20, and a location having a depth of 50 µm from the surface (i.e., surface 30a) of rolling element 30. This compressive residual stress suppresses formation of indentation on the surface of inner ring 10, the surface of outer ring 20, and the surface (surface 30a) of rolling element 30, and also suppresses crack growth starting from indentation. Thus, rolling bearing 100 can suppress hydrogen embrittlement accompanying penetration by hydrogen through a surface and also be enhanced in resistance to formation of indentation.

### <Example>

Samples 1 to 4 were prepared as samples of a bearing washer. Samples 1 and 2 were made of a steel of the composition shown in Table 4, and samples 3 and 4 were made of a steel of the composition shown in Table 5. The composition of the steel shown in Table 4 corresponds to the first composition (or the second composition), and the composition shown in Table 5 corresponds to a composition of SUJ2 that is defined in JIS (or the third composition).

### [Table 4]

**Table 4**

| C | Si | Mn | Cr | Mo | V | balance |
|---|---|---|---|---|---|---|
| 1.00 | 0.26 | 0.44 | 1.51 | 0.24 | 0.24 | Fe and unavoidable impurities |

| | | | | | | |
|---|---|---|---|---|---|---|
| unit: mass percent | | | | | | |

### [Table 5]

**Table 5**

| C | Si | Mn | Cr | Mo | V | balance |
|---|---|---|---|---|---|---|
| 0.99 | 0.26 | 0.44 | 1.51 | 0.00 | 0.00 | Fe and unavoidable impurities |

| | | | | | | |
|---|---|---|---|---|---|---|
| unit: mass percent | | | | | | |

Sample 1 was subjected to nitriding step S2, first quenching step S3, sub-zero treatment step S9, and second tempering step S6. Sample 2 was subjected to nitriding step S2, first quenching step S3, first tempering step S4, second quenching step S5, and second tempering step S6. Sample 3 was subjected to nitriding step S2, first quenching step S3, and second tempering step S6. Sample 4 was subjected to first quenching step S3 and first tempering step S4.

As shown in Table 6, samples 1 to 3 each had a compressive residual stress of 80 MPa or more in the circumferential direction in the vicinity of the raceway surface (at a location having a depth of 50 µm from the raceway surface). In contrast, sample 4 had a compressive residual stress of 30 MPa or less in the circumferential direction in the vicinity of the raceway surface (at the location having the depth of 50 µm from the raceway surface). Samples 1 to 3 were more resistant to formation of indentation on the raceway surface than sample 4. This comparison reveals that a compressive residual stress of 80 MPa or more in the vicinity of the raceway surface improves the raceway surface in resistance to formation of indentation.

As shown in Table 6, samples 1 and 2 each had a nitrogen concentration of 0.2 mass percent or more and 0.5 mass percent or less in the steel in a region up to 20 µm in depth from the raceway surface. Sample 3 had a nitrogen concentration of 0.3 mass percent or more and 0.5 mass percent or less in the steel in the region up to 20 µm in depth from the raceway surface. Sample 4 contained no nitrogen in the steel in the region up to 20 µm in depth from the raceway surface.

As shown in Table 6, samples 1 to 3 each provided precipitates containing chromium or vanadium as a major ingredient finely (with a maximum grain size of 2.0 µm or less) and densely (with an average area fraction of 1.0 percent or more) in the region up to 20 µm in depth from the raceway surface. Sample 4 had no precipitate containing chromium or vanadium as a major ingredient in the region up to 20 µm in depth from the raceway surface.

As shown in Table 6, samples 1 and 2 each had precipitates containing chromium or vanadium as a major ingredient and dispersed particularly finely and densely (with a maximum grain size of 1.0 µm or less and an average area fraction of 2.0 percent or more) in the region up to 20 µm in depth from the raceway surface. Accordingly, samples 1 and 2 each provided the steel with a hardness of 64 HRC or more at the location having the depth of 50 µm from the raceway surface and were thus particularly satisfactorily resistant to formation of indentation on the raceway surface.

As shown in Table 6, sample 1 contained retained austenite in a quantity of less than 20 volume percent in the steel at the location having the depth of 50 µm from the raceway surface and sample 2 contained retained austenite in a quantity of less than 25 volume percent in the steel at the location having the depth of 50 µm from the raceway surface. Sample 3 contained retained austenite in a quantity exceeding 25 volume percent in the steel at the location having the depth of 50 µm from the raceway surface, and sample 4 contained retained austenite in a quantity of less than 20 volume percent in the steel at the location having the depth of 50 µm from the raceway surface. This reveals that samples 1 and 2, containing retained austenite in quantities of less than 20 volume percent and less than 25 volume percent, respectively, in the steel in the vicinity of the raceway surface, suppress a dimensional change caused with time as retained austenite is decomposed.

### [Table 6]

**Table 6**

| | | sample 1 | sample 2 | sample 3 | sample 4 |
|---|---|---|---|---|---|
| region up to 20 µm in depth from raceway surface | nitrogen concentration (mass %) | 0.2 or more and 0.5 or less | 0.2 or more and 0.5 or less | 0.3 or more and 0.5 or less | 0.0 |
| | maximum grain size of precipitate containing Cr or V as major ingredient (µm) | 0.8 | 0.8 | 1.1 | no precipitate |
| | average area fraction of precipitate containing Cr or V as major ingredient (%) | 3.0 | 2.4 | 1.6 | no precipitate |
| | area fraction of cementite (%) | 6 or more and 10 or less | 1 or more and 8 or less | 6 or more and 7 or less | 8 or more and 11 or less |
| location having a depth of 50 µm from raceway surface | quantity of retained austenite (volume %) | 10 or more and less than 20 | 15 or more and less than 25 | 30 or more and less than 31 | 10 or more and less than 12 |
| | hardness (HRC) | 64 or more and 67 or less | 64 or more and 65 or less | 62 or more and 63 or less | 62 or more and 63 or less |
| | compressive residual stress in circumferential direction (MPa) | 80 or more | 80 or more | 80 or more | 30 or less |
| raceway surface' resistance to formation of indentation | | significantly excellent | significantly excellent | excellent | standard |

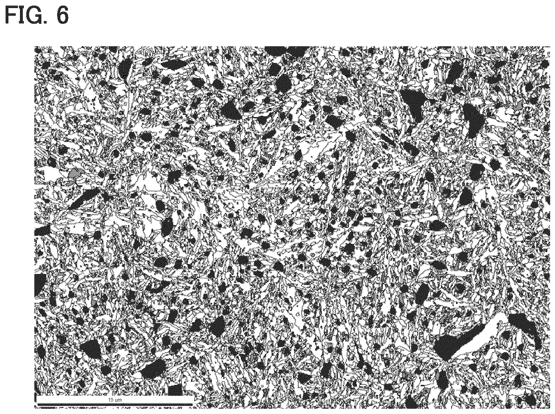

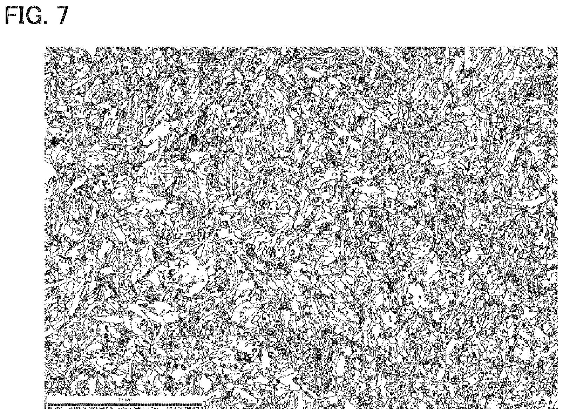

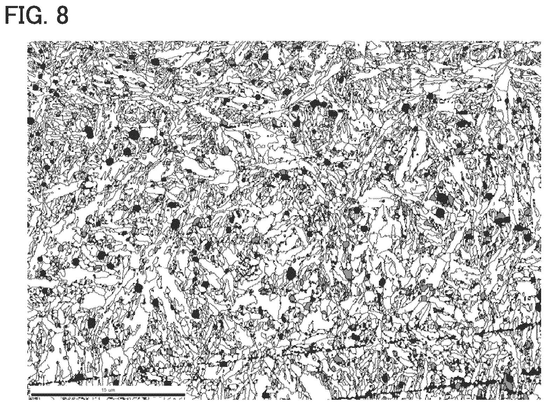

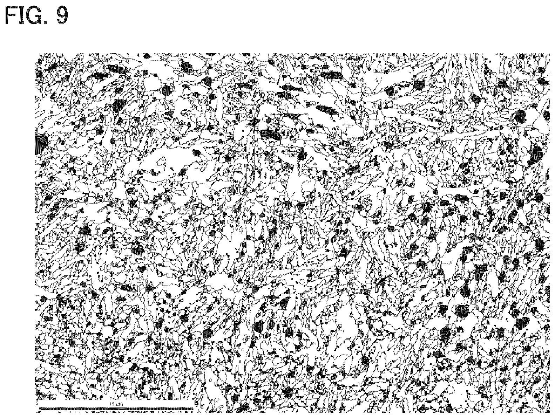

Fig. 6 is a phase map of a cross section in the vicinity of the raceway surface of sample 1, as obtained through EBSD. Fig. 7 is a phase map of a cross section in the vicinity of the raceway surface of sample 2, as obtained through EBSD. Fig. 8 is a phase map of a cross section in the vicinity of the raceway surface of sample 3, as obtained through EBSD. Fig. 9 is a phase map of a cross section in the vicinity of the raceway surface of sample 4, as obtained through EBSD. Figs. 6 to 9 show martensite block grains as white areas.

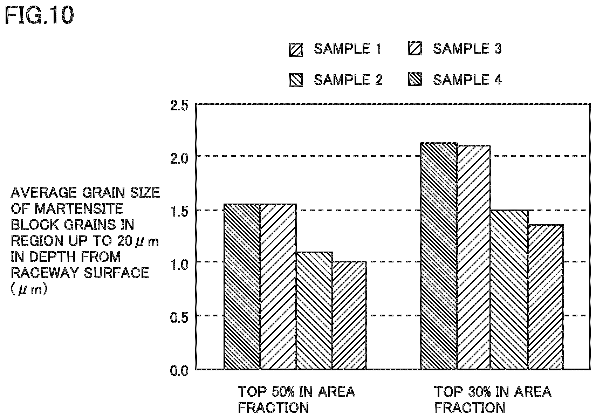

Fig. 10 is a graph showing the average grain size of martensite block grains in the steel in the region up to 20 µm in depth from the raceway surface of each of samples 1 to 4. In Fig. 10, the vertical axis represents the average grain size (in µm) of martensite block grains in the steel in the region up to 20 µm in depth from the raceway surface. As shown in Fig. 10 and Table 7, samples 1 and 2 each had the top 50 percent in area fraction of martensite block grains in the steel in the region up to 20 µm in depth from the raceway surface with an average grain size of 1.5 µm or less.

In contrast, sample 3 had the top 50 percent in area fraction of martensite block grains in the steel in the region up to 20 µm in depth from the raceway surface with an average grain size exceeding 1.5 µm. This reveals that samples 1 and 2, providing precipitates containing chromium or vanadium as a major ingredient finely and densely in the steel in the region up to 20 µm in depth from the raceway surface, consequently have martensite block grains refined and thus improve shear resistance in the vicinity of the raceway surface and hence improve the raceway surface in durability.

### [Table 7]

**Table 7**

| | average grain size of top 50% in area fraction of martensite blocks (µm) |
|---|---|
| sample 1 | 1.0 |
| sample 2 | 1.0 |
| sample 3 | 1.6 |
| sample 4 | 1.6 |

### <Hydrogen penetration property>

Samples 1 to 4 had their properties evaluated for hydrogen penetration into the surface layer portion in the following method. In this evaluation, initially, Samples 1 to 4 before use were heated from room temperature to 400°C and measured for an amount of hydrogen released from each of samples 1 to 4 before use. Second, Samples 1 to 4 were used for 50 hours in a hydrogen environment and thereafter heated from room temperature to 400°C, and measured for an amount of hydrogen released from the raceway member of each of samples 1 to 4 after they were used for 50 hours in the hydrogen environment.

As shown in Table 8, Sample 4 provided a ratio of 3.0 or more for an amount of hydrogen released after use relative to an amount of hydrogen released before use (i.e., a value obtained by dividing the amount of hydrogen released after use by the amount of hydrogen released before use). In contrast, Samples 1 and 2 provided a ratio in a range of 0.9 or more and 1.2 or less for an amount of hydrogen released after use relative to an amount of hydrogen released before use. Sample 3 provided a ratio in a range of 1.3 or more and 2.0 or less for an amount of hydrogen released after use relative to an amount of hydrogen released before use.

### [Table 8]

**Table 8**

| | ratio of amount of hydrogen released after use relative to amount of hydrogen released before use in hydrogen environment |
|---|---|
| sample 1 | 0.9-1.2 |
| sample 2 | 0.9-1.2 |
| sample 3 | 1.3-2.0 |
| sample 4 | 3.0 or more |

As described above, while Samples 1 to 3 each had a precipitate containing chromium or vanadium as a major ingredient formed in the region up to 20 µm in depth from the raceway surface, Sample 4 had no precipitate containing chromium or vanadium as a major ingredient formed in the region up to 20 µm in depth from the raceway surface. This comparison reveals that when a precipitate containing chromium or vanadium as a major ingredient is formed in surface layer portion 50, a vicinity of the precipitate serves as a site to trap hydrogen, that is, suppresses penetration by hydrogen into surface layer portion 50 and hence early flaking attributed to hydrogen brittleness.

### (Second Embodiment)

A rolling bearing according to a second embodiment will now be described. The rolling bearing according to the second embodiment will be referred to as a rolling bearing 100A. Hereinafter rolling bearing 100A will be described for what is different from rolling bearing 100, and accordingly, will not be described redundantly.

### <Configuration of Rolling Bearing 100A>

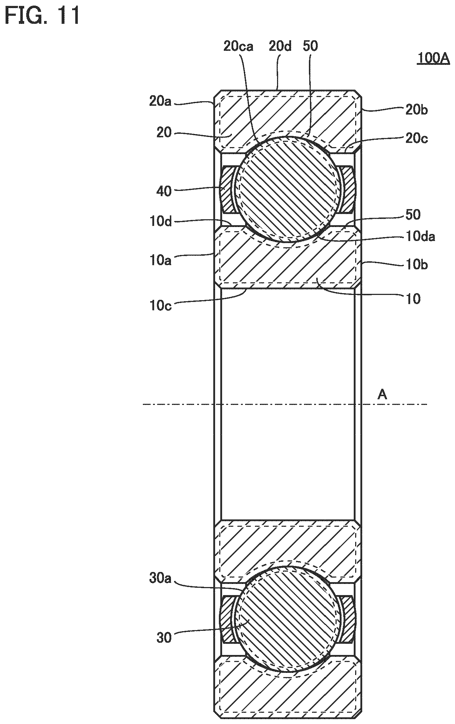

Fig. 11 is a cross section of rolling bearing 100A. As shown in Fig. 11, rolling bearing 100A comprises inner ring 10, outer ring 20, a plurality of rolling elements 30, and cage 40. Rolling bearing 100A has surface layer portion 50 formed at a surface of inner ring 10, a surface of outer ring 20, and a surface of rolling element 30. Inner ring 10, outer ring 20 and rolling element 30 are made of a steel having the first or second composition. In these respects, rolling bearing 100A is identical in configuration to rolling bearing 100.

For rolling bearing 100A, the steel preferably has a hardness of 65.5 HRC or more at a location having a depth of 50 µm from the surface of inner ring 10, a location having a depth of 50 µm from the surface of outer ring 20, and a location having a depth of 50 µm from the surface (i.e., surface 30a) of rolling element 30.

For rolling bearing 100A, the top 50 percent in area fraction of martensite block grains in the steel in surface layer portion 50 preferably has an average grain size of 1.3 µm or less. The top 30 percent in area fraction of martensite block grains in the steel in surface layer portion 50 preferably has an average grain size of 1.6 µm or less. In these respects, rolling bearing 100A is different in configuration from rolling bearing 100. Note that the average grain size of the top 50 percent in area fraction of martensite block grains is measured in the following method.

First, a cross section including surface layer portion 50 is observed. In this observation, the EBSD method is employed to identify martensite block grains included in an observation field of view. The observation field of view is an area observed at a magnification of 1,300 times. Second, the area of each martensite block grain included in the observation field of view is analyzed from crystal orientation data obtained in the EBSD method.

Third, the area of each martensite block grain included in the observation field of view is added together in descending order in area. The addition is performed until the 30 percent of the total area of the martensite block grains included in the observation field of view is reached. A circle equivalent diameter is calculated for each martensite block grain added as described above. The equivalent circle diameter is a square root of a value obtained by dividing the area of the martensite block grain by π/4. The average value of the circle equivalent diameters of the martensite block grains added as described above is regarded as the average grain size of the top 30 percent in area fraction of martensite block grains.

Thus, the second embodiment discloses the following configuration.

### <Additional Note 1>

A rolling component made of steel and having a surface, comprising
a surface layer portion that is a region up to 20 µm in depth from the surface,
the rolling component being intended for use with hydrogen-utilizing equipment,
the steel containing 0.70 mass percent or more and 1.10 mass percent or less of carbon, 0.15 mass percent or more and 0.35 mass percent or less of silicon, 0.30 mass percent or more and 0.60 mass percent or less of manganese, 1.30 mass percent or more and 1.60 mass percent or less of chromium, 0.01 mass percent or more and 0.50 mass percent or less of molybdenum, and 0.01 mass percent or more and 0.50 mass percent or less of vanadium, with a balance consisting of iron and unavoidable impurities,
in the surface layer portion, the steel having a nitrogen concentration of 0.2 mass percent or more,
in the surface layer portion, the steel having a precipitate formed therein with chromium or vanadium contained as a major ingredient,
the steel having a hardness of 64 HRC or more at a location having a distance of 50 µm from the surface,
the steel containing retained austenite in a quantity of less than 20 volume percent at the location having the distance of 50 µm from the surface.

### <Additional Note 2>

A rolling component made of steel and having a surface, comprising
a surface layer portion that is a region up to 20 µm in depth from the surface,
the rolling component being intended for use with hydrogen-utilizing equipment,
the steel containing 0.70 mass percent or more and 1.10 mass percent or less of carbon, 0.15 mass percent or more and 0.35 mass percent or less of silicon, 0.30 mass percent or more and 0.60 mass percent or less of manganese, 1.30 mass percent or more and 1.60 mass percent or less of chromium, 0.01 mass percent or more and 0.50 mass percent or less of molybdenum, and 0.01 mass percent or more and 0.50 mass percent or less of vanadium, with a balance consisting of iron and unavoidable impurities,
in the surface layer portion, the steel having a nitrogen concentration of 0.2 mass percent or more,
in the surface layer portion, the steel having a precipitate formed therein with chromium or vanadium contained as a major ingredient,
the top 50 percent in area fraction of martensite block grains in the steel in the surface layer portion having an average grain size of 1.3 µm or less,
the steel having a hardness of 64 HRC or more at a location having a distance of 50 µm from the surface,
the steel containing retained austenite in a quantity of less than 25 volume percent at the location having the distance of 50 µm from the surface.

### <Additional Note 3>

The rolling component according to Additional Note 1 or 2, wherein the steel contains 0.90 mass percent or more and 1.10 mass percent or less of carbon, 0.20 mass percent or more and 0.30 mass percent or less of silicon, 0.40 mass percent or more and 0.50 mass percent or less of manganese, 1.40 mass percent or more and 1.60 mass percent or less of chromium, 0.20 mass percent or more and 0.30 mass percent or less of molybdenum, and 0.20 mass percent or more and 0.30 mass percent or less of vanadium, with a balance consisting of iron and unavoidable impurities.

### <Additional Note 4>

The rolling component according to any one of Additional Notes 1 to 3, wherein the precipitate has a maximum grain size of 1.0 µm or less.

### <Additional Note 5>

The rolling component according to any one of Additional Notes 1 to 4, wherein the precipitate has an average area fraction of 2.0 percent or more.

### <Additional Note 6>

The rolling component according to any one of Additional Notes 1 to 5, wherein the steel has a hardness of 65.5 HRC or more at the location having the distance of 50 µm from the surface.

### <Additional Note 7>

A rolling bearing comprising:
an inner ring;
an outer ring; and
a rolling element,
the rolling bearing being intended for use with hydrogen-utilizing equipment,
at least one of the inner ring, the outer ring, and the rolling element being the rolling component according to Additional Note 1 or 2.

### <Effect of rolling bearing 100A>

Rolling bearing 100A has inner ring 10, outer ring 20 and rolling element 30 made of a steel having the first or second composition, and accordingly, has a fine precipitate formed in the steel in surface layer portion 50. This ensures that the steel has hardness on the surface of inner ring 10, the surface of outer ring 20, and the surface of rolling element 30 (more specifically, a hardness of 64 HRC or more at the location having the depth of 50 µm from the surface of inner ring 10, the location having the depth of 50 µm from the surface of outer ring 20, and the location having the depth of 50 µm from the surface of rolling element 30), and can also prevent their precipitates from being a source of stress concentration (or being as an origin of cracking).

Rolling bearing 100A has a fine precipitate formed in the steel in surface layer portion 50 and is thus ensured to have the steel with hardness on the surface of inner ring 10, the surface of outer ring 20, and the surface of rolling element 30, and accordingly, suppresses formation of a nascent metal surface on the surface of inner ring 10, the surface of outer ring 20, and the surface of rolling element 30. Rolling bearing 100A is thus less likely to generate hydrogen on the surface of inner ring 10, the surface of outer ring 20, and the surface of rolling element 30.

In rolling bearing 100A, a vicinity of a fine precipitate formed in the steel in surface layer portion 50 serves as a site to trap hydrogen, and this reduces an amount of hydrogen penetrating into surface layer portion 50. Rolling bearing 100A is thus less likely to have early flaking damage attributed to hydrogen brittleness. Rolling bearing 100A contains retained austenite in a quantity of less than 20 (or 25) volume percent in the steel at the location having the depth of 50 µm from the surface of inner ring 10, the location having the depth of 50 µm from the surface of outer ring 20, and the location having the depth of 50 µm from the surface of rolling element 30, and can thus suppress a dimensional change of inner ring 10, outer ring 20 and rolling element 30 caused by decomposition of retained austenite as temperature rises in use.

When the steel in surface layer portion 50 has martensite block grains refined such that the top 50 percent in area fraction of martensite block grains has an average grain size of 1.3 µm or less, surface layer portion 50 is increased in toughness and inner ring 10, outer ring 20, and rolling element 30 each have a surface and a vicinity thereof improved in shear resistance. Accordingly, rolling bearing 100A can further be enhanced in durability.

### (Third Embodiment)

A rolling bearing according to a third embodiment will now be described. The rolling bearing according to the third embodiment will be referred to as a rolling bearing 100B. Hereinafter rolling bearing 100B will be described for what is different from rolling bearing 100, and accordingly, will not be described redundantly.

### <Effect of rolling bearing 100B>

Rolling bearing 100B is, for example, a single-direction thrust ball bearing with flat back faces. However, rolling bearing 100B is not limited thereto. Rolling bearing 100B may for example be a deep groove ball bearing, an angular ball bearing, a cylindrical roller bearing, a conical roller bearing, or a self-aligning roller bearing. Rolling bearing 100B is intended for use with hydrogen-utilizing equipment.

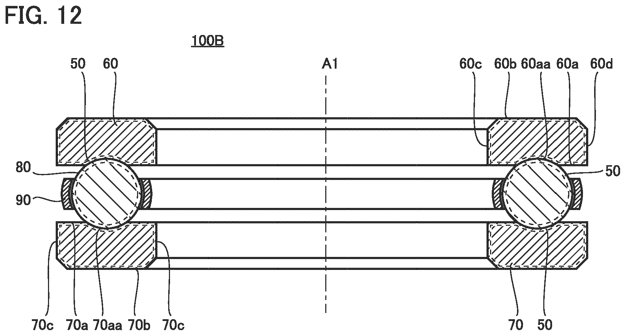

Fig. 12 is a cross section of rolling bearing 100B. As shown in Fig. 12, rolling bearing 100B has a central axis A1. Fig. 1 is a cross section of rolling bearing 100B taken along central axis A1. Rolling bearing 100B comprises a raceway member (a bearing washer or a washer) and a rolling element. For rolling bearing 100B, the raceway member is inner ring (a shaft washer) 10 and outer ring (a housing washer) 20, and the rolling element is ball 80. Rolling bearing 100B further comprises a cage 90.

An inner ring 60 has an annular shape (or is in the form a ring). Inner ring 60 has a first surface 60a, a second surface 60b, an inner circumferential surface 60c, and an outer circumferential surface 60d.

First surface 60a and second surface 60b form end faces in a direction along central axis A1 (referred to as an "axial direction" in the present embodiment). Second surface 60b is opposite to first surface 60a in the axial direction. First surface 60a has a raceway surface 60aa. First surface 60a is recessed toward second surface 60b at raceway surface 60aa. In cross section, raceway surface 60aa has a partial arc shape. Raceway surface 60aa is a surface coming into contact with ball 80, and constitutes a contact surface of inner ring 60.

Inner circumferential surface 60c is a surface facing central axis A1. Inner circumferential surface 60c has one end in the axial direction contiguous to first surface 60a and the other end in the axial direction contiguous to second surface 60b.

Outer circumferential surface 60d is a surface facing away from central axis A1. That is, outer circumferential surface 60d is a surface opposite to inner circumferential surface 60c in a direction orthogonal to central axis A1 (hereinafter referred to as a "radial direction"). Outer circumferential surface 60d has one end in the axial direction contiguous to first surface 60a and the other end in the axial direction contiguous to second surface 60b.

An outer ring 70 is in the form of a ring. Outer ring 70 has a first surface 70a, a second surface 70b, an inner circumferential surface 70c, and an outer circumferential surface 70d.

First surface 70a and second surface 70b form end faces in the axial direction. Outer ring 70 is disposed such that first surface 70a faces first surface 60a. Second surface 70b is a surface opposite to first surface 70a in the axial direction. First surface 70a has a raceway surface 70aa. First surface 70a is recessed toward second surface 70b at raceway surface 70aa. In cross section, raceway surface 70aa has a partial arc shape. Raceway surface 70aa is a surface coming into contact with ball 80, and constitutes a contact surface of outer ring 70.

Inner circumferential surface 70c is a surface facing central axis A1. Inner circumferential surface 70c has one end in the axial direction contiguous to first surface 70a and the other end in the axial direction contiguous to second surface 70b.

Outer circumferential surface 70d is a surface facing away from central axis A1. That is, outer circumferential surface 70d is a surface opposite to inner circumferential surface 70c in the direction orthogonal to central axis A1. Outer circumferential surface 70d has one end in the axial direction contiguous to first surface 70a and the other end in the axial direction contiguous to second surface 70b.

Ball 80 has a spherical shape. A plurality of balls 80 are provided. Ball 80 is disposed between first surface 60a and first surface 70a. More specifically, ball 80 is disposed between raceway surfaces 60aa and 70aa. Ball 80 comes into contact at its surface with raceway surfaces 60aa and 70aa. That is, the surface of ball 80 is a contact surface.

Cage 90 holds balls 80. Cage 90 holds balls 80 such that two balls 80 adjacent in a direction along a circumference about central axis A1 (referred to as a "circumferential direction" in the present embodiment) are spaced within a fixed range.

Inner ring 60, outer ring 70 and balls 80 are made of steel of the first composition. Inner ring 60, outer ring 70 and balls 80 may be made of steel of the second composition. The steel constituting inner ring 60, outer ring 70 and balls 80 is quenched. At least one of inner ring 60, outer ring 70 and ball 80 may be formed of the steel having the first composition (or the second composition). Inner ring 60, outer ring 70 and ball 80 have their surfaces with surface layer portion 50. Surface layer portion 50 is a region up to 20 µm in depth from each of the surface of inner ring 60, the surface of outer ring 70 and the surface of ball 80. Surface layer portion 50 may be formed at at least the contact surfaces of inner ring 60, outer ring 70 and ball 80. Surface layer portion 50 may be formed at at least one of inner ring 60, outer ring 70 and balls 80.

For rolling bearing 100B, in a cross section orthogonal to the contact surface, a total of 60 or more precipitates having a grain size of 0.5 µm or less are present in surface layer portion 50 per 100 µm². In the cross section orthogonal to the contact surface, preferably a total of 80 or more precipitates having a grain size of 0.5 µm or less are present in surface layer portion 50 per 100 µm². The precipitates in surface layer portion 50 are, for example, carbonitride and a nitride, and may be a nitride containing chromium or vanadium as a major ingredient or a carbonitride containing chromium or vanadium as a major ingredient.

For rolling bearing 100B, in the cross section orthogonal to the contact surface, a total of area fractions of precipitates in surface layer portion 50 is 1 percent or more and 10 percent or less. In the cross section orthogonal to the contact surface, the total of area fractions of precipitates in surface layer portion 50 is preferably 2 percent or more and 7 percent or less.

For rolling bearing 100B, surface layer portion 50 preferably has a nitrogen content of 0.2 mass percent or more and 0.8 mass percent or less. Surface layer portion 50 more preferably has a nitrogen content of 0.3 mass percent or more and 0.5 mass percent or less. However, surface layer portion 50 may have a nitrogen content outside the above range insofar as it allows a total of 60 or more having a grain size to be present in surface layer portion 50 per 100 µm² and allows a total of area fractions of precipitates in surface layer portion 50 to be 1 percent or more and 10 percent or less.

An area fraction of a precipitate is calculated by acquiring a cross-sectional image of surface layer portion 50 at a magnification of 5,000 times with an FE-SEM, binarizing the cross-sectional image, and subjecting the binarized cross-sectional image to image processing. The cross-sectional image of surface layer portion 50 is obtained in three or more fields of view, and the area fraction is an average value of a plurality of such cross-sectional images. The grain size of each precipitate is obtained by using the same method as described above to obtain the area of each precipitate, dividing the area by π, and multiplying the square root of the value of the divided area by 2.

For rolling bearing 100B, a volume fraction of retained austenite in the steel that forms inner ring 60, outer ring 70 and ball 80 is preferably 20 percent or more and 40 percent or less at a location having a depth of 50 µm from the contact surface. The volume fraction of retained austenite in the steel that forms inner ring 60, outer ring 70 and ball 80 is more preferably 25 percent or more and 35 percent or less at the location having the depth of 50 µm from the contact surface. This can improve the contact surface in durability in an environment in which foreign matter is introduced, and also suppress aging caused as residual austenite is decomposed.

Rolling bearing 100B preferably has a hardness of 653 Hv or more and 800 Hv or less at the location having the depth of 50 µm from the contact surface of each of inner ring 60, outer ring 70 and ball 80. Note that, while when suppressing hydrogen embrittlement attributed to hydrogen generated as a lubricating oil is decomposed, enhancing hardness in the vicinity of the contact surface to suppress formation of a nascent metal surface on the contact surface is effective for suppressing generation of hydrogen, inner ring 60, outer ring 70 and ball 80 may not have a hardness of 653 Hv or more and 800 Hv or less at the location having the depth of 50 µm from the contact surface in an environment with hydrogen present whether a nascent metal surface may be formed or not.

Hardness of inner ring 60, outer ring 70 and ball 80 at the location having the depth of 50 µm from the contact surface is measured in a Vickers hardness test method defined in JIS (JIS Z 2244:2009). The measurement is done with a load of 300 gf applied.

For rolling bearing 100B, martensite block grains in the steel in surface layer portion 50 for a comparison area fraction of 30 percent (or the top 30 percent in area fraction of martensite block grains in the steel in surface layer portion 50) preferably have an average grain size of 2.0 µm or less. More preferably, martensite block grains in the steel in surface layer portion 50 for a comparison area fraction of 50 percent have an average grain size of 1.5 µm or less. This allows surface layer portion 50 to be high in toughness and the contact surface (more specifically, raceway surface 60aa, raceway surface 70aa, and the surface of ball 80) to be improved in shear resistance.

As described above, the third embodiment discloses the following configuration.

### <Additional Note 1>

A rolling member formed of quenched steel and having a contact surface,
the rolling member being intended for use with hydrogen-utilizing equipment,
the rolling member comprising a surface layer portion that is a region up to 20 µm in depth from the contact surface,
the steel containing 0.70 mass percent or more and 1.10 mass percent or less of carbon, 0.15 mass percent or more and 0.35 mass percent or less of silicon, 0.30 mass percent or more and 0.60 mass percent or less of manganese, 1.30 mass percent or more and 1.60 mass percent or less of chromium, 0.01 mass percent or more and 0.50 mass percent or less of molybdenum, and 0.01 mass percent or more and 0.50 mass percent or less of vanadium, with a balance consisting of iron and unavoidable impurities,
in a cross section orthogonal to the contact surface, a total of 60 or more precipitates having a grain size of 0.50 µm or less being present in the surface layer portion per 100 µm², and a total of area fractions of the precipitates in the surface layer portion being 1 percent or more and 10 percent or less.

<Additional Note 2>

The rolling member according to Additional Note 1, wherein the steel contains 0.90 mass percent or more and 1.10 mass percent or less of carbon, 0.20 mass percent or more and 0.30 mass percent or less of silicon, 0.40 mass percent or more and 0.50 mass percent or less of manganese, 1.40 mass percent or more and 1.60 mass percent or less of chromium, 0.20 mass percent or more and 0.30 mass percent or less of molybdenum, and 0.20 mass percent or more and 0.30 mass percent or less of vanadium, with a balance consisting of iron and unavoidable impurities.

### <Additional Note 3>

The rolling member according to Additional Note 1 or 2, wherein the surface layer portion has a nitrogen content of 0.3 mass percent or more and 0.5 mass percent or less.

### <Additional Note 4>

The rolling member according to any one of Additional Notes 1 to 3, wherein in a cross section orthogonal to the contact surface, a total of 80 or more precipitates having a grain size of 0.50 µm or less are present in the surface layer portion per 100 µm², and a total of area fractions of the precipitates in the surface layer portion is 2 percent or more and 7 percent or less.

### <Additional Note 5>

The rolling member according to any one of Additional Notes 1 to 4, wherein a volume fraction of retained austenite at a location having a depth of 50 µm from the contact surface is 20 percent or more and 40 percent or less.

### <Additional Note 6>

The rolling member according to any one of Additional Notes 1 to 5, wherein a volume fraction of retained austenite at a location having a depth of 50 µm from the contact surface is 25 percent or more and 35 percent or less.

### <Additional Note 7>

The rolling member according to any one of Additional Notes 1 to 6, having a hardness of 653 Hv or more and 800 Hv or less at a location having a depth of 50 µm from the contact surface.

### <Additional Note 8>

A rolling bearing comprising:
a raceway member; and
a rolling element disposed in contact with the raceway member,
the rolling bearing being intended for use with hydrogen-utilizing equipment,
at least one of the raceway member or the rolling element being the rolling member according to any one of Additional Notes 1 to 7.

### <Method for Manufacturing Rolling Bearing 100B>

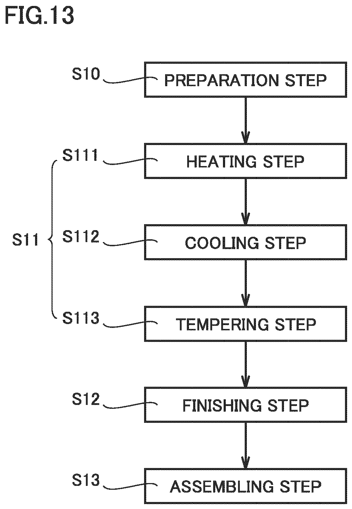

Fig. 13 represents a process of a method for manufacturing rolling bearing 100B. As shown in Fig. 13, the method for manufacturing rolling bearing 100B comprises a preparation step S10, a heat treatment step S11, a finishing step S12, and an assembling step S13. Heat treatment step S11 is performed after preparation step S10. Finishing step S12 is performed after heat treatment step S11. Assembling step S13 is performed after finishing step S12.

In preparation step S10, a workpiece to be subjected to heat treatment step S11 and finishing step S12 is prepared. As the workpiece, a ring-shaped member is prepared when inner ring 60 and outer ring 70 are to be formed, and a spherical member is prepared when ball 80 is to be formed. The workpiece is made of steel having the first composition or the second composition.

Heat treatment step S11 includes a heating step S111, a cooling step S112, and a tempering step S113. In heating step S111, the workpiece is held at a temperature equal to or higher than the A₁ transformation point for a predetermined period of time. In heating step S111, the workpiece is also subjected to a nitriding treatment. This nitriding treatment is performed by heating and holding the workpiece as described above in a gaseous atmosphere containing a gas (for example, ammonia gas) serving as a source of nitrogen. Cooling step S 112 is performed after heating step S111. In cooling step S112, the workpiece is cooled to a temperature equal to or lower than the Ms transformation point. The workpiece is oil-cooled for example. Tempering step S113 is performed after cooling step S112. In tempering step S113, the workpiece is held at a temperature lower than the A₁ transformation point for a predetermined period of time.

In finishing step S12, the workpiece is finished (ground and polished) and cleaned. Thus, inner ring 60, outer ring 70 and ball 80 are prepared. In assembling step S13, inner ring 60, outer ring 70 and ball 80 are assembled together with cage 90. Thus, rolling bearing 100B having the structure shown in Fig. 1 is manufactured.

### <Effect of rolling bearing 100B>

Rolling bearing 100B has inner ring 60, outer ring 70 and balls 80 formed of a steel of the first or second composition, and accordingly, has a fine precipitate formed in surface layer portion 50 by performing heat treatment step S11 (a nitriding treatment). A vicinity of the fine precipitate in surface layer portion 50 serves as a site to trap hydrogen, and this reduces an amount of hydrogen penetrating into surface layer portion 50. Rolling bearing 100B is thus less likely to have early flaking damage attributed to hydrogen brittleness.

### <Example>

Samples 5 and 6 were prepared as samples for a rolling bearing. Samples 5 and 6 are single-direction thrust ball bearings of JIS model No. 51106 having an inner diameter of 30 mm, an outer diameter of 47 mm, and a width of 11 mm.

Sample 5 had inner and outer rings formed of a steel having a composition shown in Table 9. The composition shown in Table 9 falls within the range of the first and second compositions. Sample 6 had inner and outer rings formed of a steel having a composition shown in Table 10. The compositions shown in Table 10 falls within a range in composition of SUJ2 defined in JIS and outside the range of the first and second compositions. Samples 5 and 6 had balls made of stainless steel (SUS440C).

### [Table 9]

**Table 9**

| C | Si | Mn | Cr | Mo | V | balance |
|---|---|---|---|---|---|---|
| 1.00 | 0.26 | 0.44 | 1.51 | 0.24 | 0.24 | Fe and unavoidable impurities |

| | | | | | | |
|---|---|---|---|---|---|---|
| unit: mass percent | | | | | | |

### [Table 10]

**Table 10**

| C | Si | Mn | Cr | Mo | V | balance |
|---|---|---|---|---|---|---|
| 0.99 | 0.26 | 0.44 | 1.51 | 0.00 | 0.00 | Fe and unavoidable impurities |

| | | | | | | |
|---|---|---|---|---|---|---|
| unit: mass percent | | | | | | |

Sample 5 had the inner and outer rings subjected to heat treatment step S11. Sample 6 did not have the inner and outer rings subjected to heat treatment step S11. More specifically, Sample 6 had the inner and outer rings quenched and tempered and did not have the rings nitrided.

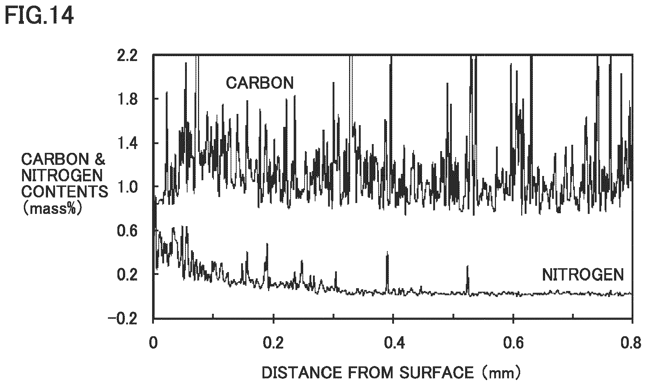

Fig. 14 is a graph showing a distribution in content of carbon and nitrogen in the surface layer portion of the inner and outer rings of Sample 5. In Fig. 14, the abscissa represents a distance from the surface (in mm), and the ordinate represents carbon and nitrogen contents (in mass percent).

As shown in Fig. 14 and Table 11, Sample 5 had the inner and outer rings subjected to heat treatment step S11 (or a nitriding treatment), and accordingly, nitrogen was contained in the surface layer portions of the inner and outer rings of Sample 5. In contrast, as shown in Table 11, Sample 6 did not have the inner and outer rings subjected to heat treatment step S11 (or a nitriding treatment), and accordingly, nitrogen was not contained in the surface layer portions of the inner and outer rings of Sample 6.

As shown in Table 11, in the surface layer portions of the inner and outer rings of Sample 5, a total of area fractions of precipitates was 2.2 percent or more and 7.0 percent or less. In the surface layer portions of the inner and outer rings of Sample 6, a total of area fractions of precipitates was 0.07 percent or more and 0.24 percent or less.

As shown in Table 11, a total of 66 or more and 425 or less precipitates were present per 100 µm² in the surface layer portions of the inner and outer rings of Sample 5. A total of 8 or more and 50 or less precipitates were present per 100 µm² in the surface layer portions of the inner and outer rings of Sample 6.

### [Table 11]

**Table 11**

| | nitrogen content in surface layer portion (mass %) | area fraction of precipitate (%) | number of precipitates per 100 µm² |
|---|---|---|---|
| inner and outer rings of sample 5 | 0.3 or more and 0.5 or less | 2.2 or more and 7.0 or less | 66 or more and 425 or less |
| inner and outer rings of sample 6 | 0 | 0.07 or more and 0.24 or less | 8 or more and 50 or less |

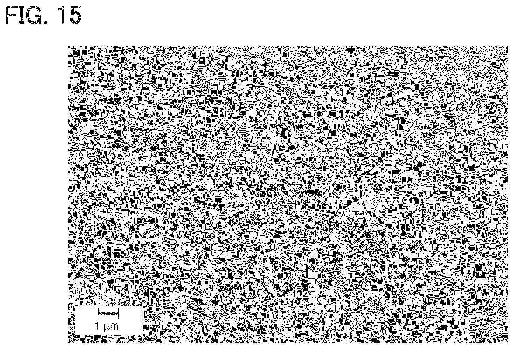

Fig. 15 is a representative cross-sectional FE-SEM image in the surface layer portions of the inner and outer rings of Sample 5. As shown in Fig. 15, precipitates were refined (with most thereof having a grain size of 0.5 µm or less) in the surface layer portions of the inner and outer rings of Sample 5. Precipitates were not refined (with most thereof having a grain size exceeding 0.5 µm) in the surface layer portions of the inner and outer rings of Sample 6.

Samples 5 and 6 had their properties evaluated for hydrogen penetration into the surface layer portion of the raceway member (the inner and outer rings) in the following method. In this evaluation, initially, Samples 5 and 6 before use each had the raceway member heated from room temperature to 400°C and measured for an amount of hydrogen released from the raceway member of each of Samples 5 and 6 before use. Second, Samples 5 and 6 were used for 50 hours in a hydrogen environment and thereafter each had the raceway member heated from room temperature to 400°C, and measured for an amount of hydrogen released from the raceway member of each of samples 5 and 6 after they were used for 50 hours in the hydrogen environment.

Sample 6 provided a ratio of 3.2 or more for an amount of hydrogen released after use relative to an amount of hydrogen released before use (i.e., a value obtained by dividing the amount of hydrogen released after use by the amount of hydrogen released before use). In contrast, Sample 5 provided a ratio of 0.9 for an amount of hydrogen released after use relative to an amount of hydrogen released before use. From this comparison it has been revealed through an experiment that surface layer portion 50 formed at the contact surface suppresses penetration by hydrogen into surface layer portion 50 and hence suppresses early flaking attributed to hydrogen brittleness.

While an embodiment of the present invention has been described as above, the embodiment can also be variously modified. Further, the scope of the present invention is not limited to the above embodiment. The scope of the present invention is defined by the terms of the claims, and is intended to include any modifications within the meaning and scope equivalent to the terms of the claims.

### REFERENCE SIGNS LIST

100 rolling bearing, 10 inner ring, 10a first end face, 10b second end face, 10c inner circumferential surface, 10d outer circumferential surface, 10da raceway surface, 20 outer ring, 20a first end face, 20b second end face, 20c inner circumferential surface, 20ca raceway surface, 20d outer circumferential surface, 30 rolling element, 30a surface, 40 cage, 50 surface layer portion, A, A1 central axis, S 1 preparation step, S2 nitriding step, S3 first quenching step, S4 first tempering step, S5 second quenching step, S6 second tempering step, S7 post-treatment step, S8 assembling step, and S9 sub-zero treatment step, 100A rolling bearing, 100B rolling bearing, 60 inner ring, 60a first surface, 60aa, raceway surface, 60b second surface, 60c inner circumferential surface, 60d outer circumferential surface, 70 outer ring, 70a first surface, 70aa raceway surface, 70b second surface, 70c inner circumferential surface, 70d outer circumferential surface, 80 ball, 90 cage, S 10 preparation step, S11 heat treatment step, S 12 finishing step, S 13 assembling step, S111 heating step, S 112 cooling step, S 113 tempering step.

## Claims

1. A rolling component made of steel and having a surface, comprising
a surface layer portion that is a region up to 20 µm in depth from the surface,
the rolling component being intended for use with hydrogen-utilizing equipment,
the steel containing 0.70 mass percent or more and 1.10 mass percent or less of carbon, 0.15 mass percent or more and 0.35 mass percent or less of silicon, 0.30 mass percent or more and 0.60 mass percent or less of manganese, and 1.30 mass percent or more and 1.60 mass percent or less of chromium,
in the surface layer portion, the steel having a precipitate formed therein with chromium or vanadium contained as a major ingredient,
the rolling component having a compressive residual stress of 80 MPa or more at a location having a distance of 50 µm from the surface.

2. The rolling component according to claim 1, wherein the steel further contains 0.01 mass percent or more and 0.50 mass percent or less of vanadium and 0.01 mass percent or more and 0.50 mass percent or more molybdenum.

3. The rolling component according to claim 1 or 2, wherein the steel contains 0.90 mass percent or more and 1.10 mass percent or less of carbon, 0.20 mass percent or more and 0.30 mass percent or less of silicon, 0.40 mass percent or more and 0.50 mass percent or less of manganese, 1.40 mass percent or more and 1.60 mass percent or less of chromium, 0.10 mass percent or more and 0.30 mass percent or less of molybdenum, and 0.20 mass percent or more and 0.30 mass percent or less of vanadium, with a balance consisting of iron and unavoidable impurities.

4. The rolling component according to any one of claims 1 to 3,
wherein the precipitate has a maximum grain size of 2.0 µm or less.

5. The rolling component according to any one of claims 1 to 4,
wherein the precipitate has an average area fraction of 1.0 percent or more.

6. The rolling component according to any one of claims 1 to 5,
wherein the steel has a hardness of 64 HRC or more at the location having the distance of 50 µm from the surface.

7. The rolling component according to any one of claims 1 to 6,
wherein the steel contains retained austenite in a quantity of less than 25 volume percent at the location having the distance of 50 µm from the surface.

8. The rolling component according to any one of claims 1 to 7,
wherein in the surface layer portion, the steel has a nitrogen concentration of 0.2 mass percent or more.

9. The rolling component according to any one of claims 1 to 8,
wherein the top 50 percent in area fraction of martensite block grains in the steel in the surface layer portion has an average grain size of 1.5 µm or less.

10. A rolling bearing comprising:
an inner ring;
an outer ring; and
a rolling element,
the rolling bearing being intended for use with hydrogen-utilizing equipment,
at least one of the inner ring, the outer ring, and the rolling element being the rolling component according to any one of claims 1 to 9.
